# EUROPÄISCHE PATENTSCHRIFT

(11) **EP 1 743 501 B1**
(45) Veröffentlichungstag und Bekanntmachung des Hinweises auf die Patenterteilung: **12.03.2008**
(21) Anmeldenummer: 05735639.6
(22) Anmeldetag: 25.04.2005
(51) Int. Cl.: H04Q 7/38

(54) **VERFAHREN ZUM DURCHFÜHREN VON MESSUNGEN DURCH EINE MOBILSTATION EINES FUNKKOMMUNIKATIONSSYSTEMS SOWIE ENTSPRECHENDE MOBILE STATION UND EINHEIT FÜR EIN FUNKKOMMUNIKATIONSSYSTEM**
METHOD FOR PERFORMING MEASUREMENTS BY A MOBILE STATION OF A RADIO COMMUNICATION SYSTEM, CORRESPONDING MOBILE STATION, AND UNIT FOR A RADIO COMMUNICATION SYSTEM
PROCEDE DE REALISATION DE MESURES PAR UNE STATION MOBILE D'UN SYSTEME DE COMMUNICATION RADIO ET STATION MOBILE ET UNITE DESTINEES A UN SYSTEME DE COMMUNICATION RADIO

(30) Priorität: 05.05.2004 DE 102004022147
(43) Veröffentlichungstag der Anmeldung: 17.01.2007
(73) Patentinhaber: Nokia Siemens Networks GmbH & Co. KG, 81541 München (DE)
(72) Erfinder: BREUER, Volker, 16727 Bötzow (DE); CHARPENTIER, Frederic, 10115 Berlin (DE); LAMPRECHT, Frank, 10439 Berlin (DE)
(86) Internationale Anmeldenummer: PCT/EP2005/051837
(87) Internationale Veröffentlichungsnummer: WO 2005/109939

(56) Entgegenhaltungen:
- EP-A- 0 693 835
- WO-A-01/67784
- WO-A-95/34180

## Beschreibung

Die Erfindung betrifft ein Verfahren zum Durchführen von Messungen durch eine mobile Station eines Funkkommunikationssystems sowie eine entsprechende mobile Station und eine Einheit für ein Funkkommunikationssystem.

In Funkkommunikationssystemen erfolgt eine Kommunikation zwischen beteiligten Stationen über elektromagnetische Wellen, die über eine Luftschnittstelle übertragen werden. Je nach Funkkommunikationssystem können einzelne oder alle Stationen des Systems stationär oder mobil sein. Eine Art von Funkkommunikationssystem mit mobilen Stationen sind die Mobilfunksysteme. Es existieren Mobilfunksysteme unterschiedlicher Mobilfunkstandards. Bekannt sind beispielsweise Mobilfunkstandards der zweiten Generation, wie beispielsweise IS-95 und GSM (Global System of Mobile Communication), sowie der dritten Generation, wie beispielsweise CDMA2000 und UMTS (Universal Mobile Telecommunication System).

In der FDD-(Frequency Division Duplex)Variante des UMTS-Standards nutzen mobile Stationen im so genannten Cell-FACH (Fast Access Channel)-Status gemeinsam den gleichen Funkkanal. Die Datenübertragungen zu den unterschiedlichen mobilen Stationen erfolgt im Codemultiplex und Zeitmultiplex. Üblicherweise weist eine mobile Station aus Kostengründen nur einen einzigen Hochfrequenzempfänger auf, der auf den Empfang im jeweiligen Frequenzband eingestellt werden muss. Um im Cell-FACH-Status auf einem Kanal in einem anderen Frequenzband als das des aktuell empfangenen Kanals messen zu können (dies ist beispielsweise notwenig, um einen Kanal einer anderen Funkzelle zu empfangen, die demselben Mobilfunkssystem angehört, so genannte Inter-Frequenz-Messungen, oder die einem anderen Mobilfunksystem angehört, so genannte Inter-System-Messungen) benötigt der Empfänger der mobilen Station gewisse zeiten, in denen er auf das jeweils andere Frequenzband umgeschaltet werden kann. Diese Zeiträume werden im UMTS-FDD-Standard als "Measurement Occasions" bezeichnet. Das Konzept der Measurement Occasions sieht vor, dass Datenübertragungen von einer Basisstation auf einem Kanal zu einer mobilen Station während zuvor festgelegter Zeiträume unterbrochen werden. Die Measurement Occasions werden unter Einbeziehung von Mobilstationsspezifischen Eigenschaften wie beispielsweise Identifikationsnummer der Mobilstation vom Mobilfunknetz festgelegt und die Datenübertragung auf dem Kanal, dem die Measurement Occasions zugeordnet werden, wird entsprechend gestaltet. Hierdurch wird sichergestellt, dass von der mobilen Station keine Daten auf dem entsprechenden Kanal empfangen werden müssen, während sie Inter-Frequenz- oder Inter-System-Messungen durchführt. Hierdurch wird ein Verlust von andernfalls während der Measurement Occasions übertragenen Daten vermieden.

In Mobilfunksystemen wie beispielsweise GSM und UMTS ist die Einführung so genannter MBMS (Multimedia Broadcast Multicast Service)-Dienste vorgesehen. Während einer so genannten MBMS-Session überträgt eine Basisstation Daten über einen gemeinsam genutzten Kanal gleichzeitig an alle mobilen Teilnehmer der Session. Nach dem UMTS-FDD-Standard können sich mobile Stationen während einer MBMS-Session ebenfalls im Cell-FACH-Status befinden. Es ist vorgesehen, dass solche mobile Stationen unabhängig davon, ob sie sich an einer MBMS-Session beteiligen oder nicht, die Measurement Occasions berücksichtigen, um während dieser Zeiträume die notwendigen Messungen auf anderen Kanälen durchführen zu können. Im Gegensatz zu einer Übertragung von individuellen Daten zu einer einzelnen mobilen Station, die sich im Cell-FACH-Status befindet, lässt sich jedoch während einer MBMS-Session der Verlust von auf dem jeweiligen Kanal übertragenen Daten nur mit sehr großem Aufwand vermeiden. Dies liegt daran, dass eine Synchronisation der unterschiedlichen Measurement Occasions für alle an einer MBMS-Session teilnehmenden mobilen Stationen einen zu hohen Aufwand bedeuten würde. Das bedeutet, dass die Measurement Occasions für die unterschiedlichen teilnehmenden mobilen Stationen zu unterschiedlichen Zeitpunkten beginnen und enden, so dass die Übertragung von Daten während einer MBMS-Session zur Vermeidung von Datenverlusten an den einzelnen mobilen Stationen häufig unterbrochen werden müsste. Hierdurch würden aber die Übertragungskapazität und die vorteile einer Punkt-zu-Multipunkt-Übertragung stark in Mitleidenschaft gezogen. Aus diesem Grunde scheint eine Lösung vorzuziehen zu sein, wonach die Datenübertragung in einer MBMS-Session nicht unterbrochen wird, obwohl zeitgleich Measurement Occasions für an der Session teilnehmende mobile Stationen vorgesehen sind.

Der Erfindung liegt die Aufgabe zugrunde, eine Verbesserung des Betriebs einer mobilen Station für ein Funkkommunikationssystem zu ermöglichen, bei dem die mobile Station über einen ersten Kanal Daten empfängt, und die mobile Station dem Empfang der Daten vorübergehend unterbricht, um Messungen auf wenigstens einem zweiten Kanal durchzuführen.

Diese Aufgabe wird mit einem Verfahren, einer mobilen Station sowie einer Einheit für ein Funkkommunikationssystem gemäß den nebengeordneten Patentansprüchen gelöst. Vorteilhafte Ausführungsformen und Weiterbildungen der Erfindung sind Gegenstand abhängiger Ansprüche.

Beim erfindungsgemäßen Verfahren zum Durchführen von Messungen durch eine mobile Station eines Funkkommunikationssystem empfängt die mobile Station über einen ersten Kanal Daten. Die mobile Station unterbricht den Empfang der Daten vorübergehend, um Messungen auf wenigstens einem zweiten Kanal durchzuführen. Dabei erfolgt die Unterbrechung des Empfangs abhängig von einer Korrigierbarkeit von bei der Datenübertragung über den ersten Kanal entstehenden Fehlern.

Die Aufgabe wird auch gelöst durch ein Verfahren zum Veranlassen von Unterbrechungen des Empfangs einer mobilen Station eines Funkkommunikationssystems von über einen ersten Kanal übertragenen Daten, wobei die Unterbrechungen dazu dienen, dass die mobile Station Messungen auf wenigstens einem zweiten Kanal durchführt. Das Verfahren sieht vor, dass die Unterbrechungen des Empfangs abhängig von einer Korrigierbarkeit von bei der Datenübertragung über den ersten Kanal entstehenden Fehlern veranlasst werden. Die Datenübertragung kann dabei auch während der Unterbrechungen insbesondere kontinuierlich erfolgen.

Die Erfindung ist auf beliebige Funkkommunikationssysteme mit mobilen Stationen anwendbar, eignet sich insbesondere jedoch zur Anwendung in Mobilfunksystemen. Dabei kann sie auf Mobilfunksysteme beliebiger Standards angewendet werden. Die Unterbrechung des Empfangs abhängig von der Fehlerkorrigierbarkeit zu machen, kann beispielsweise so realisiert werden, dass Unterbrechungen nur erfolgen, wenn bestimmte Anforderungen an die Korrigierbarkeit erfüllt sind, indem beispielsweise ein bestimmter Grenzwert der Fehlertoleranz der Datenübertragung erreicht wird. Die Abhängigkeit von der Fehlerkorrigierbarkeit kann auch beispielsweise darin bestehen, dass die zeitliche Lage, die Dauer oder die Häufigkeit von Unterbrechungen des Empfangs in Abhängigkeit von ihr festgelegt werden. Sinnvoll ist es, wenn beispielsweise die Dauer der Unterbrechung bzw. Unterbrechungen oder ihre Häufigkeit mit zunehmender Fehlerkorrigierbarkeit der Datenübertragung zunimmt.

Die Erfindung eignet sich insbesondere zur Anwendung in Funkkommunikationssystemen, bei denen während der Unterbrechung des Empfangs durch die mobile Station weiterhin Daten über den ersten Kanal übertragen werden. Da die Unterbrechung des Empfangs nämlich in Abhängigkeit von der Fehlerkorrigierbarkeit der Datenübertragung erfolgt, kann erreicht werden, dass die während der Unterbrechung von der mobilen Station nicht empfangenen, über den ersten Kanal übertragenen Daten wie während der Datenübertragung auftretende Übertragungsfehler behandelt werden. Das bedeutet, dass die fehlenden Daten (oder zumindest ein Teil dieser Daten) wie Übertragungsfehler im Rahmen der Fehlerkorrigiermöglichkeiten des verwendeten Datenübertragungsverfahren empfängerseitig korrigiert bzw. rekonstruiert werden können, so dass der unterbliebene Empfang dieser Daten sich nicht auswirkt. Je besser die Fehlerkorrigierbarkeit der Datenübertragung über den ersten Kanal ist, desto wahrscheinlicher ist es, dass während der Unterbrechung des Empfangs durch die mobile Station nicht empfangene Daten durch entsprechende Fehlerschutzmechanismen des verwendeten Übertragungsprotokolls rekonstruiert werden können. Mit besserer Fehlerkorrigierbarkeit der Datenübertragung können somit längere oder häufigere Unterbrechungen des Empfangs durchgeführt werden, als bei schlechterer Fehlerkorrigierbarkeit. Da die Durchführungen der Unterbrechungen dazu dienen, Messungen auf dem zweiten Kanal durchzuführen, können somit mit besserer Fehlerkorrigierbarkeit der Datenübertragung auch mehr Messungen durchgeführt werden.

Eine Ausführungsform der Erfindung sieht vor, dass die über den ersten Kanal übertragenen Daten Daten eines Broadcast-Dienstes sind, die von einer Vielzahl von mobilen Stationen des Funkkommunikationssystems gleichzeitig empfangbar sind. Insbesondere kann es sich dabei um einen MBMS-Dienst handeln.

Die Erfindung ermöglicht bei einem Broadcast-Dienst, der von mehreren mobilen Stationen empfangen wird, die Durchführung von Unterbrechungen zu Messzwecken für die mobilen Stationen unsynchronisiert, d.h. zu beliebigen Zeitpunkten unabhängig voneinander, durchzuführen. Grund hierfür ist, dass jede mobile Station in der Lage ist, die von ihr während der Unterbrechungen nicht empfangenen Daten individuell (wenigstens teilweise) zu rekonstruieren.

Die Messungen auf dem Kanal können beispielsweise dazu dienen, einen Kanalwechsel vom ersten auf den zweiten Kanal vorzubereiten (so genannte Cell-Reselection).

Nach einer Ausführungsform der Erfindung ist der erste Kanal in einem ersten Frequenzband und der zweite Kanal in einem zweiten Frequenzband angeordnet. Da die Messungen auf dem zweiten Kanal während der Unterbrechungen des Empfangs auf dem ersten Kanal durchgeführt werden, kann für beide Zwecke derselbe Hochfrequenzempfänger der mobilen Station verwendet werden, der lediglich auf das entsprechende Frequenzband jeweils einzustellen ist.

Nach einer weiteren Ausführungsform der Erfindung sind der erste und der zweite Kanal jeweils unterschiedlichen Funkzellen desselben oder unterschiedlicher Funkkommunikationssysteme zugeordnet.

Nach einer Weiterbildung der Erfindung wird die Korrigierbarkeit von Fehlern für die Datenübertragung über den ersten Kanal anhand
- einer Kodierrate des ersten Kanals und/oder
- eines für den ersten Kanal verwendeten Kanalkodierverfahrens und/oder
- von Fehlerschutzmechanismen höherer Schichten eines Übertragungsprotokolls für die Übertragung der Daten über den ersten Kanal
bestimmt.

Die Kodierrate eines Kanals bezeichnet das Verhältnis aus übertragenen Nutzdaten zur gesamten Datenmenge, wobei die gesamte Datenmenge sich aus den Nutzdaten zuzüglich von sonstigen Daten, einschließlich von Daten, die der Fehlerkorrektur der übertragenen Daten dienen, ergibt.

Unterschiedliche Kanalkodierverfahren sind beispielsweise die Turbokodierung und die Faltungskodierung. Bei gleicher Kodierrate können diese beiden Kodierungsverfahren unterschiedliches Verhalten hinsichtlich der Fehlerkorrigierbarkeit von unter ihrer Verwendung übertragenen Daten aufweisen.

Als Fehlerschutzmechanismen höherer Schichten des verwendeten Übertragungsprotokolls kommt insbesondere das so genannte Interleaving (Verschachtelung der zu übertragenden Daten mit einer Interleavingtiefe, die der Länge eines Übertragungszeitraumes, dem sogenannten Transmission Time Interval, TTI entspricht) oder das so genannte Outer Coding (Verschachtelung der zu übertragenden Daten mit einer Interleavingtiefe, die der Länge mehrerer aufeinander folgender TTIs entspricht) in Betracht.

Nach einer Weiterbildung der Erfindung ermittelt die mobile Station und/oder eine Einrichtung des Funkkommunikationssystems wenigstens einen Parameter der Unterbrechungen anhand der Korrigierbarkeit von Fehlern für die Datenübertragung über den ersten Kanal. Der Parameter der Unterbrechungen kann beispielsweise
- die Häufigkeit der Unterbrechungen pro Zeiteinheit und/oder
- Zeitpunkte für die Durchführung der Unterbrechungen und/oder
- Zeitanteile der Unterbrechungen pro Zeiteinheit betreffen.

Nach einer Weiterbildung der Erfindung wird von der Einrichtung des Funkkommunikationssystems eine Information zur mobilen Station übertragen, von der der wenigstens eine Parameter ableitbar ist. Dass heißt der Parameter wird vollständig oder teilweise netzseitig bestimmt.

Nach einer Weiterbildung der Erfindung bezieht sich der Parameter auf eine bestimmte Menge von Unterbrechungen und beschreibt eine Untermenge dieser Menge. Dabei kann bei einer Ausführungsform der Erfindung die Menge von Unterbrechungen durch so genannte measurement occasions nach dem UMTS-Standard gebildet werden. Dabei kann die Ermittlung dieser measurement occasions günstigerweise auf dieselbe Art erfolgen, wie dies bislang nach dem UMTS-Standard vorgesehen ist. Es ist dann möglich, dass der Parameter beispielsweise lediglich einen Prozentwert angibt und die mobile Station in Abhängigkeit von einem solchen Prozentsatz nur einen entsprechenden Anteil der auf herkömmliche Weise ermittelten measurement occasions in Form von Unterbrechungen des Empfangs auf dem ersten Kanal nutzt.

Nach einer Weiterbildung der Erfindung wird in Abhängigkeit einer beabsichtigten Änderung der Anzahl und/oder Häufigkeit und/oder Zeitdauer der Unterbrechungen die Korrigierbarkeit von bei der Übertragung über den ersten Kanal entstehenden Fehlern angepasst. Das bedeutet, dass beispielsweise bei einer gewünschten Verlängerung des für die Messungen auf dem zweiten Kanal zur Verfügung stehenden Zeitraums bewusst die Fehlerkorrigierbarkeit verbessert wird, um für während der für die Messungen durchzuführenden Unterbrechungen des Empfangs auf dem ersten Kanal wenigstens einen Teil der während der Unterbrechungen über den ersten Kanal nicht empfangenen Daten rekonstruieren zu können. Die Erhöhung der Fehlerkorrigierbarkeit zu diesem Zweck kann dabei beispielsweise auch nur vorübergehend erfolgen und bei späterem geringerem Bedarf an der Durchführung von Messungen wieder abgesenkt werden. Eine Erhöhung der Fehlerkorrigierbarkeit kann zum Beispiel durch die Wahl eines besseren Kanalkodierverfahrens oder eine niedrigere Kodierrate oder auch verbesserte Fehlerschutzmechanismen einer höheren Protokollschicht des Übertragungsprotokolls für die Datenübertragung über den ersten Kanal erreicht werden.

Die erfindungsgemäße mobile Station für ein Funkkommunikationssystem hat
- Mittel zum Empfang von Daten über einen ersten Kanal,
- Mittel zum vorübergehenden Unterbrechen des Empfangs der Daten,
- Mittel zum Durchführen von Messungen auf wenigstens einem zweiten Kanal während der Unterbrechungen,
wobei die Mittel zum Unterbrechen des Empfangs entsprechende Unterbrechungen abhängig von einer Korrigierbarkeit von bei der Datenübertragung über den ersten Kanal entstehenden Fehlern durchführen.

Die Einheit für ein Funkkommunikationssystem weist Mittel zum Veranlassen von Unterbrechungen des Empfangs einer mobilen Station des Funkkommunikationssystems von über einen ersten Kanal übertragenen Daten auf, wobei die Unterbrechungen dazu dienen, dass die mobile Station Messungen auf wenigstens einem zweiten Kanal durchführt. Die Mittel zum Veranlassen der Unterbrechungen veranlassen die Unterbrechungen abhängig von einer Korrigierbarkeit von bei der Datenübertragung über den ersten Kanal entstehenden Fehlern.

Die erfindungsgemäße mobile Station und die erfindungsgemäße Einheit für ein Funkkommunikationssystem weisen in Ausführungsformen und Weiterbildungen entsprechende Mittel auf, um die Ausführungsformen und Weiterbildungen der nach dem erfindungsgemäßen Verfahren vorgesehenen Schritte zu realisieren.

Die Erfindung wird im Folgenden anhand von in den Figuren dargestellten Ausführungsbeispielen näher erläutert. Es zeigen:
- Figur 1: einen Ausschnitt eines Funkkommunikationssystems, in dem eine mobile Station Daten über zwei Kanäle empfängt,
- Figur 2: Einzelheiten zu über die beiden Kanäle aus Figur 1 übertragenen Daten und
- Figur 3: ein weiteres Ausführungsbeispiel für über einen der Kanäle aus Figur 1 übertragene Daten.

Obwohl die Erfindung auf beliebige Funkkommunikationssysteme mit mobilen Stationen anwendbar ist und damit auch für beliebige Mobilfunksysteme, wird sie im Folgenden anhand eines UMTS-FDD-Mobilfunksystems näher erläutert.

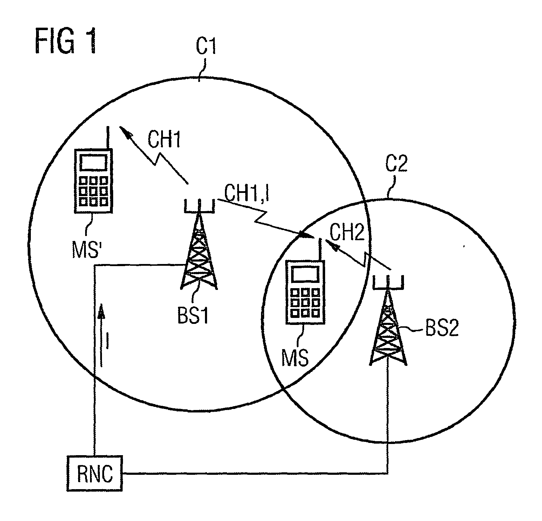

Figur 1 zeigt einen Ausschnitt eines zellularen Mobilfunksystems. Dargestellt sind lediglich zwei Funkzellen C1, C2. Jede Funkzelle C1 C2 wird durch je eine Basisstation BS1, BS2 versorgt. In einem Übergangsbereich zwischen den beiden Funkzellen C1, C2 befindet sich eine mobile Station MS. Sie empfängt Daten über einen Kanal CH1 von der ersten Basisstation BS1 und über einen zweiten Kanal CH2 von der zweiten Basisstation BS2. Die Daten des ersten Kanals CH1 werden in einem Rundsendebetrieb (Broadcast) von der ersten Basisstation BS1 ausgesendet und können unter anderem von weiteren mobilen Stationen MS' empfangen werden. Die Basisstationen BS1, BS2 sind mit einem gemeinsamen Basisstationscontroller RNC verbunden, wobei bei anderen Ausführungsbeispielen der Erfindung beiden Basisstationen auch unterschiedliche Basisstationscontroller zugeordnet sein können.

Die über den ersten Kanal CH1 in Figur 1 übertragenen Daten sind einem MBMS-Dienst zugeordnet. Der zweite Kanal CH2 der zweiten Basisstation BS2 ist ein Organisationskanal, konkret ein BCCH (Broadcast Control Channel) der zweiten Basisstation BS2. Die mobile Station MS empfängt zunächst die MBMS-Daten des ersten Kanals CH1. Da sie sich zwar innerhalb der ersten Funkzelle C1, jedoch im Übergangsbereich zur zweiten Funkzelle C2 befindet, ist es erwünscht, dass die mobile Station MS Messungen auf dem zweiten Kanal CH2 durchführt, um dessen Empfangsqualität zu ermitteln. Bei anderen Ausführungsbeispielen der Erfindung können die genannten Messungen auch dazu dienen, neben dem zweiten Kanal CH2 weitere Organisationskanäle anderer Basisstationen (in Figur 1 nicht dargestellt) zu vermessen. Die Ergebnisse dieser Messungen dienen in dem Fachmann bekannter weise zur Vorbereitung von Kanalwechseln bzw. Zellwechseln für die mobile Station MS (so genannte Handover oder Cell Reselction). Die beiden Kanäle CH1, CH2 werden in unterschiedlichen Frequenzbändern betrieben, da den beiden Basisstationen BS1, BS2 zur Vermeidung gegenseitiger Störungen unterschiedliche Frequenzbänder zugewiesen sind. Die mobile Station MS verwendet jedoch bei diesem Ausführungsbeispiel ein und denselben Empfänger, um Signale über beide Kanäle CH1, CH2 zu empfangen. Dies kann selbstverständlich nur sequentiell erfolgen, wobei der Empfänger auf das jeweils zutreffende Frequenzband eingestellt wird.

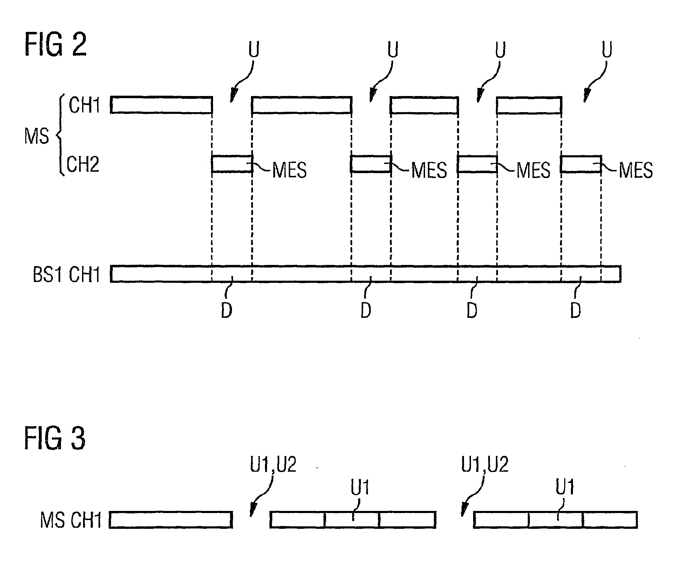

Bei diesem Ausführungsbeispiel ermittelt der Basisstationscontroller RNC eine Information I, aus der Parameter von durch die mobile Station MS durchzuführenden Unterbrechungen ableitbar sind. Der Basisstationscontroller RNC übermittelt die Information I mittels der ersten Basisstation BS1 zur mobilen Station MS. Hierfür wird ein spezieller, dem MBMS-Dienst zugeordneter Steuerkanal zwischen der ersten Basisstation BS1 und der mobilen Station MS verwendet. Der Basisstationscontroller RNC ermittelt die Information I in Abhängigkeit von während der Korrigierbarkeit von der Datenübertragung über den ersten Kanal CH1 möglicherweise entstehenden Fehlern. Konkret wird die mobile Station MS angewiesen, zunächst wenige Unterbrechungen zu Messzwecken durchzuführen, und später die Frequenz dieser Unterbrechungen zu erhöhen, wie im Folgenden anhand von Figur 2 noch erläutert wird. Die Häufigkeit der Unterbrechungen wird dabei erhöht, nachdem zu deren Vorbereitung die Fehlerkorrigierbarkeit für die Datenübertragung über den ersten Kanal CH1 erhöht worden ist, indem beispielsweise die Kodierrate für den ersten Kanal CH1 durch Einfügung zusätzlicher Fehlerkorrekturdaten erniedrigt wurde.

Figur 2 zeigt für das betrachtete Ausführungsbeispiel im unteren Teil die Aussendung der MBMS-Daten über den ersten Kanal CH1 durch die erste Basisstation BS1. Diese erfolgt im betrachteten Zeitraum kontinuierlich. In der ersten Zeile der Figur 2 ist der Empfang der über den ersten Kanal CH1 übertragenen Daten durch die mobile Station MS dargestellt. Der Empfang weist periodische Unterbrechungen U auf, die die mobile Station MS in Abhängigkeit der vom Basisstationscontroller RNC übermittelten Information I und der davon ableitbaren Parameter für die Unterbrechungen U durchführt. Während der Unterbrechungen U des Empfangs auf dem ersten Kanal CH1 wechselt die mobile Station MS den Empfang auf den zweiten Kanal CH2 der zweiten Basisstation BS2 und führt dort Messungen MES durch, deren Ergebnisse sie auf dem Fachmann bekannte Weise der ersten Basisstation BS1 mitteilt. Die Ergebnisse dieser Messungen MES dienen im Funkkommunikationssystem der Entscheidung, ob ein Handover zu einem Kanal der zweiten Basisstation BS2 erfolgen soll oder nicht.

Figur 2 ist entnehmbar, dass die Zeiträume zwischen den Unterbrechungen U in Abhängigkeit von der Information I zunächst länger sind, als zwischen den drei letzten in der Figur 2 dargestellten Unterbrechungen. Dies liegt daran, dass die Fehlerkorrigierbarkeit der Datenübertragung über den ersten Kanal CH1 nach der in Figur 2 dargestellten ersten Unterbrechung U durch Absenkung der Kodierrate auf die weiter oben beschriebene Art erhöht worden ist.

Der letzten Zeile in Figur 2 sind auch diejenigen Daten D zu entnehmen, die über den ersten Kanal CH1 ausgesendet werden, während die mobile Station MS ihren Empfang unterbricht. Diese Daten werden von der mobilen Station folglich nicht empfangen. Um auf diese Daten nicht vollständig verzichten zu müssen, versucht die mobile Station MS einen möglichst großen Anteil dieser Daten D unter Nutzung der ihr zur Verfügung stehenden Fehlerkorrekturverfahren zu rekonstruieren. Dies kann insbesondere dann Erfolg versprechend durchgeführt werden, wenn die über den ersten Kanal übertragenen Daten CH1 einem besonders starken Interleaving (Verschachtelung) unterworfen sind. Ein Interleaving gestattet nämlich, abhängig von der Anzahl von vorgesehenen Fehlerkorrekturbits, auch die Rekonstruktion von größeren Datenblöcken, da die einzelnen innerhalb dieser Datenblöcke übertragenen Nutzdatenbits vor dem Interleaving bzw. nach dem Deinterleaving einander nicht benachbart sind.

Die in Figur 2 dargestellten Unterbrechungen U des Empfangs der Daten über den ersten Kanal CH1 seitens der mobilen Station MS können über die Informationen I beispielsweise in folgender Weise übermittelt werden: Der Basisstationscontroller signalisiert der mobilen Station MS über die Information I die Anzahl der durchzuführenden Unterbrechungen U pro Zeitrahmen und gegebenenfalls auch ihre jeweilige Zeitdauer und/oder zeitliche Lage. Es ist jedoch auch möglich, dass die mobile Station MS einen Teil der für die Festlegung der Unterbrechungen U notwendigen Parameter oder all diese selbsttätig anhand von vorgegebenen Algorithmen ermittelt, jedoch immer abhängig von der jeweils gewährleisteten Fehlerkorrigierbarkeit.

Sofern die mobile Station MS alle für die Bestimmung der Unterbrechungen U, U2 notwendigen Parameter selbst ermittelt, ist die Überragung einer entsprechenden Information I vom Basisstationscontroller RNC zur mobilen Station MS natürlich nicht notwendig.

Figur 3 zeigt für ein anderes Ausführungsbeispiel der Erfindung den Empfang der über den ersten Kanal CH1 übertragenen Daten durch die mobile Station MS. Beim in Figur 3 dargestellten Ausschnitt der Datenübertragung erfolgte keine Veränderung der Fehlerkorrigierbarkeit der Datenübertragung über den ersten Kanal CH1, so dass die Anzahl der Unterbrechungen nicht verändert wird. Dargestellt ist eine erste Menge von Unterbrechungen U1, die so genannte measurement occasions nach dem UMTS-Standard sind und von der mobilen Station MS auf die nach dem UMTS-Standard vorgesehene Weise ermittelt werden. Dies erfolgt durch Berücksichtigung von drei Parametern:
1. Die Menge der measurement occasions U1 wird nach dem UMTS-Standard durch das längste so genannte Transmission Time Interval (TTI) auf dem SCCPCH (Secondary Control Physical Channel) bestimmt.
2. Die Häufigkeit der measurement occasions U1 wird durch einen Parameter k bestimmt, der der mobilen Station MS vom Basisstationscontroller RNC übermittelt wird.
3. Die zeitliche Lage der measurement occasions U1 wird weiterhin von der mobilen Station MS anhand ihrer individuellen Kennung bestimmt.

Die nach dem UMTS-Standard bereits vorgesehenen Parameter k können beispielsweise gemeinsam mit der Information I aus Figur 1 zur mobilen Station MS übertragen werden. Beim Ausführungsbeispiel gemäß Figur 3 beinhaltet die Information I lediglich einen Prozentsatz, im vorliegenden Fall nämlich 50%, der angibt, welcher Anteil der measurement occasions U1, die üblicherweise nur für Messungen im Cell-FACH Status (keine Übertragung zur jeweiligen mobilen Station während der ihr zugeordneten measurement occasions) vorgesehen sind, für die Unterbrechungen U2 auf dem ersten Kanal CH1 des MBMS-Dienstes genutzt werden sollen. Dieser Prozentsatz von 50% wird als Parameter über die Information I zur mobilen Station MS übertragen. Als Folge dessen nutzt die mobile Station MS gemäß Figur 3 nur 50% der measurement occasions U1, die sie auf die vorgenannte Art ermittelt hat, also nur jede zweite measurement occasion U1 für die Durchführung von Unterbrechungen U2 gemäß der Erfindung. Nur während dieser Unterbrechung U2 führt sie die anhand Figur 2 bereits beschriebenen Messungen MES auf dem zweiten Kanal CH2 durch.

Bei einer anderen Ausführungsform der Erfindung könnte stattdessen jede measurement occasion U1 für die Durchführung der Unterbrechungen U2 genutzt werden, jedoch nur mit 50% ihrer Länge. Dies hätte den Vorteil, dass während der mit kürzerer Dauer (jedoch dafür häufiger) durchgeführten Unterbrechungen jeweils weniger Daten nicht empfangen werde. Daher wären diese in größerem Umfang korrigierbar, wenn man dieselbe Fehlerkorrigierbarkeit unterstellt.

Durch die erfindungsgemäße Durchführung der Unterbrechungen U, U2 in Abhängigkeit von der Fehlerkorrigierbarkeit kann trotz Durchführung der Unterbrechungen beim Empfang einer kontinuierlichen Datenübertragung über den ersten Kanal CH1, beispielsweise in Form von MBMS-Daten, erreicht werden, dass die Übertragungsqualität bzw. Dienstqualität trotz der Unterbrechungen bestimmte Mindestwerte erreicht. Die Übertragungsqualität bzw. der so genannte Quality of Service kann beispielsweise durch Ermittlung der Blockfehlerrate BLER ermittelt werden.

Beim Ausführungsbeispiel gemäß Figur 3 erfolgen weniger Unterbrechungen U2, als dies für measurement occasions für mobile Stationen im Cell-FACH Status vorgesehen ist. Hierdurch wird ein Kompromiss erreicht zwischen einerseits dem Erfordernis, Messungen beispielsweise zum Vorbereiten von Wechseln zwischen Funkzellen überhaupt durchführen zu können und andererseits der Notwendigkeit, die Unterbrechungen U, U2 während des Empfangs eines kontinuierlichen Dienstes, wie es beispielsweise MBMS-Dienste sind, so gering zu halten, dass während dieser Unterbrechungen erfolgende Datenverluste D sich nicht zu negativ auswirken, indem wenigstens ein Teil dieser Datenverluste D durch die vorhandenen Fehlerkorrekturmechanismen für die gewählte Datenübertragung über den ersten Kanal CH1 ausgeglichen werden.

Die Information I aus Figur 1, die zwischen dem Basisstationscontroller RNS und der mobilen Station MS ausgetauscht wird, wird über höhere Schichten des verwendeten Übertragungsprotokolls übertragen.

Die Parameter der Unterbrechungen U, U2 werden so bestimmt, dass in Abhängigkeit der zur Verfügung stehenden Fehlerkorrigierbarkeit der Datenübertragung ein gewünschter Quality of Service (Dienstqualität) möglichst nicht unterschritten wird, dass heißt der durch die Durchführung der Messungen MES auf dem zweiten Kanal CH2 bzw. die Unterbrechungen U, U2 entstehende Datenverlust D beim Empfang des ersten Kanals CH1 wird so kontrolliert, dass er unter zu erwartenden Übertragungsbedingungen (dass heißt ohne Vorliegen besonders schwerer zusätzlicher Fehlereinflüsse) durch die zur Verfügung stehenden Fehlerkorrekturmechanismen kompensiert werden kann. Besonders starke Fehlereinflüsse sind bei der Nutzung von MBMS-Diensten jedoch nicht zu erwarten, da es sich bei diesen um hochratige Datendienste handelt, die in der Regel nur in Anspruch genommen werden, wenn der Teilnehmer der mobilen Station MS sich relativ wenig bzw. gar nicht bewegt, so dass starke Veränderungen der Überragungsqualität während der laufenden Übertragung, beispielsweise aufgrund von Fading, relativ selten auftreten.

## Patentansprüche

1. Verfahren zum Durchführen von Messungen (MES) durch eine mobile Station (MS) eines Funkkommunikationssystems, bei dem
- die mobile Station (MS) über einen ersten Kanal (CH1) Daten empfängt,
- die mobile Station den Empfang der Daten vorübergehend unterbricht (U), um Messungen (MES) auf wenigstens einem zweiten Kanal (CH2) durchzuführen,
- die Unterbrechung (U) des Empfangs abhängig von einer Korrigierbarkeit von bei der Datenübertragung über den ersten Kanal (CH1) entstehenden Fehlern erfolgt.

2. Verfahren zum Veranlassen von Unterbrechungen (U) des Empfangs einer mobilen Station (MS) eines Funkkommunikationssystems von über einen ersten Kanal (CH1) übertragenen Daten,
- wobei die Unterbrechungen (U) dazu dienen, dass die mobile Station (MS) Messungen (MES) auf wenigstens einem zweiten Kanal (CH2) durchführt,
- bei dem die Unterbrechungen (U) des Empfangs abhängig von einer Korrigierbarkeit von bei der Datenübertragung über den ersten Kanal (CH1) entstehenden Fehlern veranlasst werden.

3. Verfahren nach einem der vorstehenden Ansprüche, bei dem während der Unterbrechung (U) des Empfangs weiterhin Daten über den ersten Kanal (CH1) übertragen werden.

4. Verfahren nach Anspruch 3, bei dem
die während der Unterbrechung (U) von der mobilen Station (MS) nicht empfangenen, über den ersten Kanal (CH1) übertragenen Daten wie während der Datenübertragung auftretende Übertragungsfehler behandelt werden.

5. Verfahren nach einem der vorstehenden Ansprüche, bei dem die Korrigierbarkeit von Fehlern anhand
- einer Codierrate des ersten Kanals (CH1) und/oder
- eines für den ersten Kanal (CH1) verwendeten Kanalcodierverfahrens und/oder
- von Fehlerschutzmechanismen höherer Schichten eines Übertragungsprotokolls für die Übertragung der Daten über den ersten Kanal (CH1)
bestimmt wird.

6. Verfahren nach einem der vorstehenden Ansprüche, bei dem die mobile Station (MS) und/oder eine Einrichtung (RNC) des Funkkommunikationssystems wenigstens einen Parameter der Unterbrechungen (U) anhand der Korrigierbarkeit von Fehlern ermittelt.

7. Verfahren nach Anspruch 6, bei dem
der wenigstens eine Parameter
- die Häufigkeit der Unterbrechungen (U) pro Zeiteinheit und/oder
- Zeitpunkte für die Durchführung der Unterbrechungen (U) und/oder
- Zeitanteile der Unterbrechungen (U) pro Zeiteinheit betrifft.

8. Verfahren nach Anspruch 6 oder 7, bei dem
von der Einrichtung (RNC) des Funkkommunikationssystems eine Information (I) zur mobilen Station (MS) übertragen wird, von der der wenigstens eine Parameter ableitbar ist.

9. Verfahren nach einem der Ansprüche 6 bis 8, bei dem
sich der Parameter auf eine bestimmte Menge (U1) von Unterbrechungen bezieht und eine Untermenge (U2) dieser Menge beschreibt.

10. Verfahren nach Anspruch 9, bei dem
die Menge von Unterbrechungen (U1) so genannte Measurement Occasions nach dem UMTS-Standard sind.

11. Verfahren nach einem der vorstehenden Ansprüche, bei dem in Abhängigkeit einer beabsichtigten Änderung der Anzahl und/oder Häufigkeit und/oder Zeitdauer der Unterbrechungen (U) die Korrigierbarkeit von bei der Übertragung über den ersten Kanal (CH1) entstehenden Fehlern angepasst wird.

12. Verfahren nach einem der vorstehenden Ansprüche, bei dem der erste Kanal (CH1) in einem ersten Frequenzband und der zweite Kanal (CH2) in einem zweiten Frequenzband angeordnet ist.

13. Verfahren nach einem der vorstehenden Ansprüche, bei dem der erste Kanal (CH1) und der zweite Kanal (CH2) unterschiedlichen Funkzellen (C1, C2) desselben oder unterschiedlicher Funkkommunikationssysteme zugeordnet sind.

14. Mobile Station (MS) für ein Funkkommunikationssystem
- mit Mitteln zum Empfang von Daten über einen ersten Kanal (CH1),
- mit Mitteln zum vorübergehenden Unterbrechen des Empfangs der Daten,
- mit Mitteln zum Durchführen von Messungen (MES) auf wenigstens einem zweiten Kanal (CH2) während der Unterbrechungen (U),
- deren Mittel zum Unterbrechen des Empfangs entsprechende Unterbrechungen (U) abhängig von einer Korrigierbarkeit von bei der Datenübertragung über den ersten Kanal (CH1) entstehenden Fehlern durchführen.

15. Einheit (RNC) für ein Funkkommunikationssystem
- mit Mitteln zum Veranlassen von Unterbrechungen (U) des Empfangs einer mobilen Station (MS) des Funkkommunikationssystems von über einen ersten Kanal (CH1) übertragenen Daten, wobei die Unterbrechungen (U) dazu dienen, dass die mobile Station (MS) Messungen (MES) auf wenigstens einem zweiten Kanal (CH2) durchführt,
- deren Mittel zum Veranlassen der Unterbrechungen (U) die Unterbrechungen abhängig von einer Korrigierbarkeit von bei der Datenübertragung über den ersten Kanal (CH1) entstehenden Fehlern veranlassen.

## Claims

1. Method for carrying out measurements (MES) by a mobile station (MS) of a radio communication system, in which
- the mobile station (MS) receives data via a first channel (CH1),
- the mobile station temporarily interrupts (U) the reception of the data in order to carry out measurements (MES) on at least a second channel (CH2),
- the interruption (U) of the reception is carried out depending on an ability to correct errors occurring during the data transmission via the first channel (CH1).

2. Method for instigating interruptions (U) of the reception by a mobile station (MS) of a radio communication system of data transmitted via a first channel (CH1),
- whereby the interruptions (U) serve the purpose that the mobile station (MS) carries out measurements (MES) on at least a second channel (CH2),
- in which the interruptions (U) of the reception are instigated depending on an ability to correct errors occurring during the data transmission via the first channel (CH1) .

3. Method according to one of the preceding claims, in which data continue to be transmitted via the first channel (CH1) during the interruption (U) of the reception.

4. Method according to claim 3, in which
the data transmitted via the first channel (CH1) but not received by the mobile station (MS) during the interruption (U) are treated as transmission errors occurring during the data transmission.

5. Method according to one of the preceding claims, in which the ability to correct errors is determined using
- a coding rate of the first channel (CH1), and/or
- a channel coding method used for the first channel (CH1), and/or
- error-protection mechanisms of higher layers of a transmission protocol for the transmission of the data via the first channel (CH1).

6. Method according to one of the preceding claims in which the mobile station (MS) and/or a device (RNC) of the radio communication system determines at least one parameter of the interruptions (U) on the basis of the ability to correct errors.

7. Method according to claim 6, in which
the at least one parameter relates to
- the frequency of the interruptions (U) per time unit, and/or
- times for the performance of the interruptions (U), and/or
- time components of the interruptions (U) per time unit.

8. Method according to claim 6 or 7, in which
information (I), from which the at least one parameter can be derived, is transmitted from the device (RNC) of the radio communication system to the mobile station (MS).

9. Method according to one of claims 6 to 8, in which
the parameter relates to a specific set (U1) of interruptions and describes a subset (U2) of this quantity.

10. Method according to claim 9, in which
the set of interruptions (U1) involves "Measurement Occasions" according to the UMTS standard.

11. Method according to one of the preceding claims, in which
the ability to correct errors occurring during the transmission via the first channel (CH1) is adapted depending on an intended change in the number and/or frequency and/or time duration of the interruptions (U).

12. Method according to one of the preceding claims, in which
the first channel (CH1) is disposed in a first frequency band, and the second channel (CH2) is disposed in a second frequency band.

13. Method according to one of the preceding claims, in which
the first channel (CH1) and the second channel (CH2) are assigned to different radio cells (C1, C2) of the same or of different radio communication systems.

14. Mobile station (MS) for a radio communication system
- with means for receiving data via a first channel (CH1),
- with means for temporarily interrupting the reception of the data,
- with means for carrying out measurements (MES) on at least a second channel (CH2) during the interruptions (U),
- whose means for interrupting the reception carry out corresponding interruptions (U) depending on an ability to correct errors occurring during the data transmission via the first channel (CH1).

15. Unit (RNC) for a radio communication system
- with means for instigating interruptions (U) in the reception by a mobile station (MS) of the radio communication system of data transmitted via a first channel (CH1), whereby the interruptions (U) serve the purpose that the mobile station (MS) carries out measurements (MES) on at least a second channel (CH2),
- whose means for instigating the interruptions (U) instigate the interruptions depending on an ability to correct errors occurring during the data transmission via the first channel (CH1).

## Revendications

1. Procédé de réalisation de mesures (MES) par une station mobile (MS) d'un système de communication radio, dans lequel
- la station mobile (MS) reçoit des données par l'intermédiaire d'un premier canal (CH1),
- la station mobile interrompt temporairement (U) la réception des données afin d'exécuter des mesures (MES) sur au moins un deuxième canal (CH2),
- l'interruption (U) de la réception ayant lieu en fonction d'une possibilité de corriger des erreurs se produisant lors la transmission de données par l'intermédiaire du premier canal (CH1) .

2. Procédé destiné à causer des interruptions (U) de la réception d'une station mobile (MS) d'un système de communication radio de données transmises par l'intermédiaire d'un premier canal (CH1),
- les interruptions (U) servant à ce que la station mobile (MS) exécute des mesures (MES) sur au moins un deuxième canal (CH2),
- dans lequel les interruptions (U) de la réception sont causées en fonction d'une possibilité de corriger des erreurs se produisant lors de la transmission de données par l'intermédiaire du premier canal (CH1).

3. Procédé selon l'une quelconque des revendications précédentes, dans lequel,
pendant les interruptions (U) de la réception, les données continuent d'être transmises par l'intermédiaire du premier canal (CH1).

4. Procédé selon la revendication 3, dans lequel
les données transmises par l'intermédiaire du premier canal (CH1) et non reçues par la station mobile (MS) pendant l'interruption (U) sont traitées comme des erreurs de transmission se produisant pendant la transmission de données.

5. Procédé selon l'une quelconque des revendications précédentes, dans lequel
la possibilité de corriger des erreurs est déterminée à l'aide
- d'un taux de codage du premier canal (CH1) et/ou
- d'un procédé de codage de canal utilisé pour le premier canal (CH1) et/ou
- de mécanismes de protection d'erreurs de couches plus élevées d'un protocole de transmission pour la transmission des données par l'intermédiaire du premier canal (CH1).

6. Procédé selon l'une quelconque des revendications précédentes, dans lequel
la station mobile (MS) et/ou un dispositif (RNC) du système de communication radio détermine au moins un paramètre des interruptions (U) à l'aide de la possibilité de corriger des erreurs.

7. Procédé selon la revendication 6, dans lequel
l'au moins un paramètre concerne
- la fréquence des interruptions (U) par unité de temps et/ou
- des moments pour l'exécution des interruptions (U) et/ou
- des fractions de temps des interruptions (U) par unité de temps.

8. Procédé selon la revendication 6 ou 7, dans lequel
une information (I) est transmise par le dispositif (RNC) du système de communication mobile à la station mobile (MS), de laquelle information l'au moins un paramètre peut être déduit.

9. Procédé selon l'une quelconque des revendications 6 à 8, dans lequel
le paramètre fait référence à un ensemble déterminé (U1) d'interruptions et décrit un sous-ensemble (U2) de cet ensemble.

10. Procédé selon la revendication 9, dans lequel
l'ensemble d'interruptions (U1) sont des dites Measurement Occasions selon la norme UMTS.

11. Procédé selon l'une quelconque des revendications précédentes, dans lequel
la possibilité de corriger des erreurs se produisant lors de la transmission par l'intermédiaire du premier canal (CH1) est adaptée en fonction d'une modification voulue du nombre et/ou de la fréquence et/ou de la durée des interruptions (U).

12. Procédé selon l'une quelconque des revendications précédentes, dans lequel
le premier canal (CH1) est disposé dans une première bande de fréquence et le deuxième canal (CH2) dans une deuxième bande de fréquence.

13. Procédé selon l'une quelconque des revendications précédentes, dans lequel
le premier canal (CH1) et le deuxième canal (CH2) sont affectés à différentes cellules radio (C1, C2) du même système de communication radio ou de différents systèmes de communication radio.

14. Station mobile (MS) pour un système de communication radio
- comprenant des moyens pour la réception de données par l'intermédiaire d'un premier canal (CH1),
- comprenant des moyens pour interrompre temporairement la réception des données,
- comprenant des moyens pour exécuter des mesures (MES) sur au moins un deuxième canal (CH2) pendant les interruptions (U),
- dont les moyens pour l'interruption de la réception exécutent des interruptions correspondantes (U) en fonction d'une possibilité de corriger des erreurs se produisant lors de la transmission de données par l'intermédiaire du premier canal (CH1).

15. Unité (RNC) pour un système de communication radio
- comprenant des moyens destinés à causer des interruptions (U) de la réception d'une station mobile (MS) du système de communication radio de données transmises par l'intermédiaire d'un premier canal (CH1), les interruptions (U) servant à ce que la station mobile (MS) exécute des mesures (MES) sur au moins un deuxième canal (CH2),
- dont les moyens destinés à causer les interruptions (U) causent les interruptions en fonction d'une possibilité de corriger des erreurs se produisant lors de la transmission des données par l'intermédiaire du premier canal (CH1).
